Europäisches Patentamt

European Patent Office

Office européen des brevets

(11) Publication number: **0 176 826**
**A2**

(12) **EUROPEAN PATENT APPLICATION**

(21) Application number: **85111475.1**

(22) Date of filing: **11.09.85**

(51) Int. Cl.⁴: **G 01 M 11/02**

(30) Priority: **24.09.84 US 654209**

(43) Date of publication of application:
**09.04.86 Bulletin 86/15**

(84) Designated Contracting States:
**CH DE FR GB LI**

(71) Applicant: **KOLLMORGEN TECHNOLOGIES
CORPORATION
66 Gatehouse Road
Stamford Connecticut 06902(US)**

(72) Inventor: **Kravetz, Alan G.
16 Broad Street
New Windsor, NY 12550(US)**

(72) Inventor: **Kishner, Stanley J.
5 Mohawk Lane
Pomona, NY 10970(US)**

(74) Representative: **Königseder, Claudia
Zugspitzstrasse 65
D-8104 Grainau(DE)**

(54) **Method and apparatus for dual-beam spectral transmission measurements.**

(57) In the measurement of the optical transmittance of a sample, a beam which is split from a source of illumination is directed through the sample and then redirected back through the sample. The redirected beam and a reference beam which is also split from the source of illumination are alternately applied to a photodetector. Both the sample beam and the reference beam pass through a monochromator prior to application to the photodetector. The output of the photodetector is processed by an electronic circuit and applied to a computer. Data representative of the two beams can be compared in order to provide an indication of the amount of light the sample transmits at certain optical wavelengths.

./...

Croydon Printing Company Ltd.

EP 0 176 826 A2

FIG. 2

POWER SUPPLY

10

9

11

15

14

16

12

13

25

24

26

19

20

ELECTRONICS

21

COMPUTER

17

22

18

23

This invention relates in general to optical measuring equipment and, more specifically, to dual-beam spectral transmission measurements.

A considerable amount of information can be acquired about a material by measuring the amount of light the material transmits at certain optical wavelengths. Information about material characteristics such as color, absorption of harmful UV rays, indications of a medical condition, thickness, polarization, etc., can all be obtained by such measurements. Measurements of material transmittance at one or more wavelengths are called spectral transmission measurements.

If such a measurement is to be useful, it must be made with a precise, accurate and repeatable instrument. Typically, this is accomplished with a laboratory spectrophotometer. A large number of such laboratory spectrophotometers use the so-called "dual-beam ratio" measurement technique to stabilize the measurements. The advantages of a dual beam measurement have been well known for a considerable length of time, as indicated in "Applied Optics and Optical Engineering", Vol. V, Academic Press, 1969.

A typical laboratory transmission spectrophotometer utilizing the dual-beam ratio technique uses a light source to provide the necessary energy over the appropriate band of wavelengths. By means of appropriate optics, the light is directed to a section of the instrument called the "monochromator", which separates the light into its component wavelengths. This wavelength separation, usually called dispersion, can be accomplished by a prism or diffraction grating or combination, contained within the monochromator. Another means of achieving wavelength separation is through the use of narrowband optical filters. Upon emerging from the monochromator, the beam of light would impinge upon a rotating beam alternator or splitter. This device could be a continuously rotating disc, with one half mirrored, and the other half containing an aperture. The purpose of this device is to create two optical paths through which light is alternately passed. One path is formed as a result of reflection from the mirrored portion, and the other path is formed as a result of transmission through the aperture.

The two paths are called the "sample" path (or beam) and the "reference" path (or beam). The sample to be measured is placed in the sample beam. The reference beam usually just passes through air. These two beams are directed towards a common detector and are alternately received and processed by the electronics.

It is essential that the reference path be as similar to the sample path as possible. Ideally, all components of the sample path should also be present in the reference path. The only difference should be the presence of the sample in the sample path. Just as the sample beam is used to gather information about the sample, the reference beam contains information about the instrument. It is not correct to assume that any change in signal level in the sample path is due to just the sample. Changes in lamp efficiencies, either due to aging or power supply drift, optical-mechanical movement, changes in detector sensitivity or electronic gain changes        can all influence the strength of the detected signal.

If the instrument monochromator uses optical filters, this presents an additional problem in that filter transmission efficiencies often change as a function of temperature. All of these sources of variation, however, also occur in the reference path, and can, therefore, be detected and compensated for. While instrument variations affect both beams, the presence of the sample affects the sample beam only.

There are various ways to use the information from the reference beam in a dual-beam instrument. The most common method is to divide all sample beam measurements by the corresponding reference beam measurement. Since all sources of variation are common to both beams, they cancel, leaving only the effect of the transmittance of the sample.
Another use of the reference path is to allow for a difference measurement to be accomplished. Typically, in a lab
transmission spectrophotometer, two transmissive cells or
cuvettes are placed in the instrument, i.e., one in the
sample beam and one in the reference beam. A reference solution is placed in the reference cuvette and an unknown
in the sample cuvette. In this manner, the difference between the transmittance of the solutions is recorded.
Whether the ratio, difference, or other technique is used,
an additional technique called "dark correction" is often
applied to both beams of a dual-beam instrument. During
each cycle of the beam alternator, there is a time in which
the detector receives no light. The "dark" signal is subtracted from both  the sample and reference beams, thus
eliminating offsets in the electronics, stray light or
background thermal radiation.
The requirement for making stable, accurate and precise
measurements does not apply to the laboratory process alone.
Optical measurements are commonly used in process measurement applications for the monitoring and control of industrial processes. Such measurements are common in the
production of textiles, paper, printed materials, plastics
and petrochemicals.
Often, such optical measurements must be made in a non-
contact, non-destructive, real-time fashion. Such a
situation might occur in the production of a continuous
web of plastic. Here, one would want to monitor various
properties of the plastic, such  as thickness or color,
while it is being manufactured. Typically, the plastic is
moving at the rate of 66 bis 165 cm per second. A considerable amount of waste could be generated in the time
it would take to remove a sample from a roll, take it to
a laboratory and make a measurement on a lab spectrophotometer.
It is, therefore, advantageous to make in-process measurements of sample transmittance, to reduce waste as well as improve quality. However, the generally accepted method of creating a reference beam cannot be applied in processes like plastic extrusion, in which the sample size can be quite large. There is often no practical configuration that will allow the use of a reference beam. The sample effectively cuts the spectrophotometer "in-half", the source on one side of the sample, and the detector on the other side. There is no alternate path from source to detector that does not pass through the sample. One solution to this problem is to move the spectrophotometer "off-line", so that the sample is no longer in the sample path. Then the sample path can be used as a reference path. This solution is unwieldly, requiring frequent movement of the spectrophotometer. Measurements are missed while the spectrophotometer is off-line. Furthermore, some sources of spectrophotometer variation occur too rapidly to be accounted for by this approach.

Dual beaming is not limited to transmission instruments. In US patent 4 097 743 there is described an instrument to measure moisture. This instrument utilizes the dual beam ratio technique for making infrared spectral reflection measurements on a sample to determine its moisture content. Two light paths are obtained from a light source with the aid of two separate mirrors. These light paths are directed to a rotating filter wheel. This wheel contains two filters which are alternately exposed to the light paths to form a reference and a sample beam. The filtered sample beam then impinges on the sample. The reflected light from the sample is directed to the detector. The same detector alternately sees the filtered reference signal as well. These signals are ratioed and the moisture content is calculated.

This instrument has the disadvantage that the light beams that make up the sample and reference path are obtained from two different areas of the lamp. This makes the two paths unequally sensitive to lamp of filament motion. In addition, two separate mirrors are used to create the two paths. This also could lead to differences in the optical paths.

A reference beam may be incorporated into a transmittance spectrophotometer by placing a mirror behind the sample, such that the transmitted light of the sample beam is redirected through the sample. The light ends up on the source side of the sample, and so does the detector. Since the light source and detector are no longer separated by the sample, a reference path is easily obtained. Furthermore, the "double pass" of light through the sample doubles the sensitivity of the spectrophotometer to changes in transmittance of the sample.

It is, therefore, an object of this invention to make on-line process measurements of sample transmittance that are stable, accurate and repeatable.

It is a further object of this invention to provide increased sensitivity in optical transmittance measurements, while stabilizing such measurements through the incorporation of a reference beam.

These and other objects are achieved by a process comprising the steps of providing a beam of illumination; dividing said beam into a sample beam and a reference beam; directing said sample beam through said sample; redirecting said sample beam back through said sample; directing said sample beam to a photodetector; directing said reference beam to said photodetector; blocking said reference beam to obtain a sample measurement; blocking said sample beam to obtain a reference measurement; and calculating the ratio of said sample measurement to said reference measurement to obtain a measurement of sample transmittance.

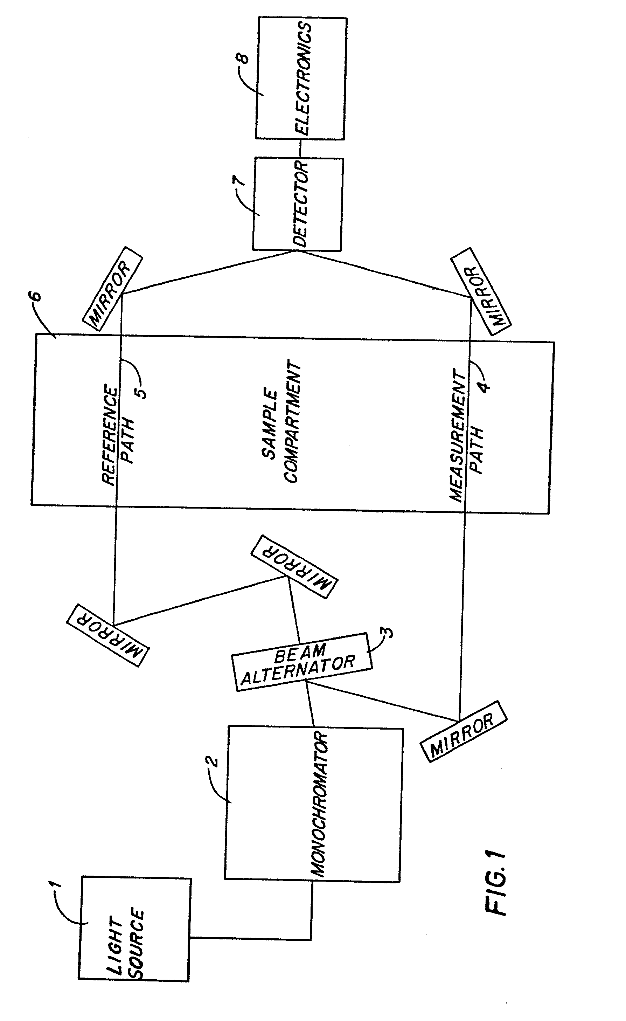

Figure 1 shows a block diagram of a typical prior art dual-beam laboratory spectrophotometer. Light source (1) provides the necessary radiant energy to make the spectral measurement. The light source often contains more than one type of lamp to cover the desired spectral range. A light source (1) such as a deuterium lamp, can also be used for internal wavelength calibration of an instrument because it emits an intense amount of energy at a known specific wavelength. The appropriate optics direct the light to the section of the instrument which separates or isolates the light into discrete wavelengths. This section of the instrument is called a monochromator (2). It often has an entrance and exit slit with a grating or gratings, prism or combinations thereof to disperse the light into discrete wavelengths. It may also consist of a wheel of optical filters. The isolated wavelengths exit the monochromator (2) and impinge upon a beam alternator and/or chopping mechanism (3). The beam alternator (3) performs the function of creating a measurement path (4), a reference path (5) and usually a period when all energy is blocked so that a dark reading can be taken to zero out electronic source of error such as offsets. The beam alternator (3) can be a rotating disc (not shown) with a mirrored section to divert the beam to the sample compartment (6) to form the measurement path (4). The disc can also contain an aperture that allows the beam to pass into the sample compartment (6) and form the reference path (5). The disc would also have an opaque section to completely block the energy to allow time for a dark measurement to be made.

The sample compartment (6) is usually of sufficient size as to allow the user to place samples, transmission cells, etc. in either or both of the two beams to accomplish the measurement. Upon exiting the sample compartment (6), the measurement beam (4) and the reference beam (5) impinge upon the appropriate optics to be combined alternately at the detector (7) and then to be processed by the electronics (8). This typical arrangement, using a relatively small sample compartment, and for which the light source (1) and detector (7) are on opposite sides of the sample, makes the measurement of large or on-line samples impractical.

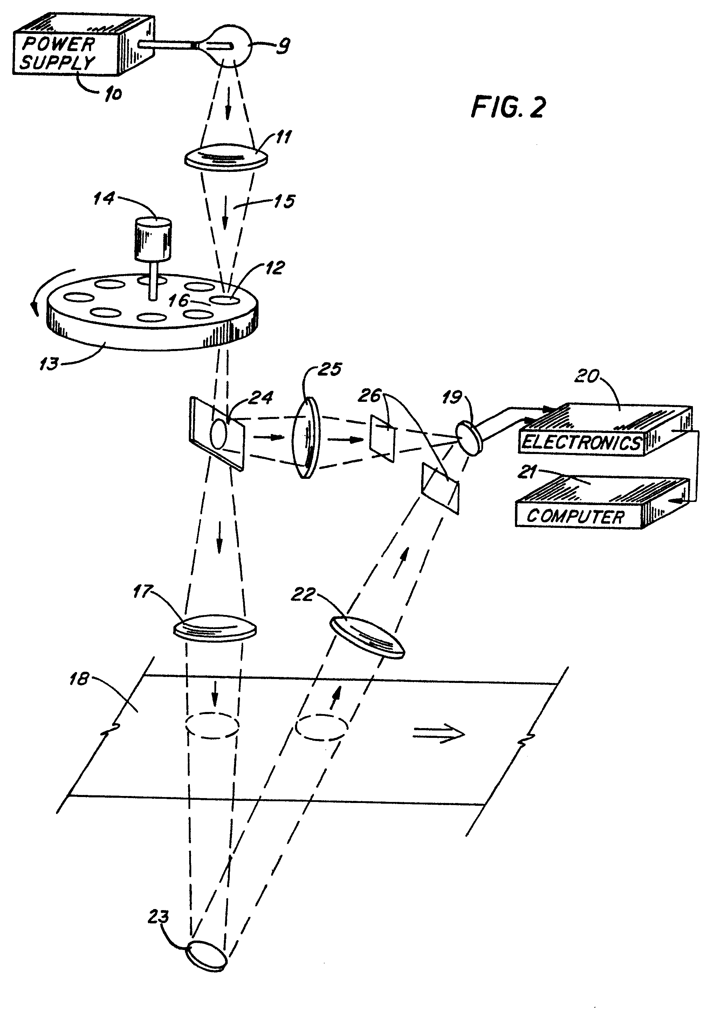

Figure 2 shows a preferred embodiment of an instrument of the present invention that overcomes these problems and still allows stable "dual-beam" measurements to be made. The optical arrangement shown in Figure 2 is one possible embodiment of an apparatus that could be used to make
on-line, non-contact, non-destructive dual-beam transmission measurements on a moving web.

A light source (9) provides optical radiation over the
full spectral range required by the instrument. For
visible (0.4 to 0.7 µm) and near infrared (0.7 to 2.7 µm)
applications, a tungsten filament lamp is preferably
used as the light source (9). A regulated power supply
(10) provides a constant source of current to ensure a
stable output from the light source (9). A collection lens
(11) is used to gather light emitted by the source (9),
and direct it through an optical filter (12) located in a
rotating filter wheel (13). The filter (12) is used to
isolate the band of wavelengths at which the transmittance
measurement is to be made. The filter (12) is usually a
multilayer inter_ference filter which can isolate a narrow
band of  wavelengths (e.g., less than 0.01 µm).
The filter wheel (13) contains a number of such filters
in order to effect transmittance measurements at multiple
wavelengths. As mentioned above, there are other methods
of isolating narrow bands of wavelength. Among these are
a moving prism or grating or tilting interference filter.
One further alternative would be an acousto-optic tunable
filter. The filter wheel (13) rotates at constant speed,
driven by a motor (14).  As each filter (12) moves into
the beam of light (15) that is transmitted through the
collection lens (11), it transmits its own narrow band of
wavelengths. The intensity of light transmitted through
each filter (12) increases as the filter moves into the
beam (15), reaches a maximum when it is centered with respect to the beam , and then decreases as it moves out of
the beam. The spaces (16) between filters (12) on the
filter wheel (13)  are larger than the diameter of the
beam (15), so that the light transmitted by the filter
wheel (13) is completely extinguished between filters (12).
This allows various means of electronic zero correction
for bias in the output, since the optical signal is truly

0176826

equal to zero between filters (12).

As the light emerges from the filter (12) it impinges upon a beam splitter (24) whose function is to provide the reference path as well as a measurement path. The beam splitter (24) resides between the filter wheel (13) or dispersion device and lens (17) which directs the measurement beam to the sample (18). The beam splitter (24) may be a piece of glass or other such material tilted at an angle such that the reflection off the surface or surfaces is directed toward the lens (25) and forms the reference path. This type of beam splitter is preferably coated so that anywhere from 4% to 30% of the measurement beam intensity is directed into the reference path.

An alternate method by which to produce the two paths would be to have the light impinge on a bifurcated fiber optic cable (not shown). One leg of the fiber would form the measurement path and the other the reference path. For applications in which polarized light is required (as in measurement of dichroism), the beam splitter (24) may be the polarizing element. An additional polarizing element can be placed in the sample beam after it has passed through the sample to act as a polarization analyzer. After the measurement beam passes through the beam splitter (24) it emerges from lens (17) and then onto the sample (18). The beam then passes through the sample (18) for the first time to a backing mirror (23). This mirror (23) reflects the beam back through the sample (18) at an angle for a second pass. This double pass increases the optical path length of the sample and improves sensitivity. The beam is then  collected by lens (22) and directed to detector (19). The reference beam created by the beam splitter (24) is directed by the lens (25) to detector (19). A shutter mechanism (26) is disposed between lenses (22) and (25) and the detector (19). It alternately blocks either the reference beam or the measurement beam from detector (19), allowing the remaining beam to hit the detector (19). The detector (19) can be one of a number of photosensitive devices, including, but not limited to, silicon, germanium, lead sulfide, lead selenide, indium antimonide, mercury cadmium telluride, photomultiplier tubes or pyroelectric materials. The signals from the detector (19) are processed by system electronics (20) for use by a computer (21) to calculate parameters related to the material. This configuration can also be used for laboratory off-line measurements. This configuration of a measurement and a reference beam allows the technique of dual beaming to be designed into an instrument.

It should be noted that the filter wheel (13) or monochromator can alternatively be located between the shutter mechanism (26) and the detector (19). In this arrangement, broadband light is transmitted through both sample and reference paths, and wavelengths are isolated just before the detector (19). This arrangement, however, is not preferred, for several reasons. Firstly, the use of broadband illumination can cause unwanted heating of the sample (18) or system optical elements, such as beam splitter (24) or backing mirror (23). Thermal radiation emitted by a heated sample or optical component can interfere with the desired measurement.

Secondly, design of the filter wheel (13) or monochromator is complicated by the fact that the sample and reference beams are incident upon the detector (19) at different angles. Both of these beams would have to pass through the filter wheel (13) or monochromator at different angles, thus making the two beams spectrally different.

- 10 -

0176826

CLAIMS:

1. A method for measuring the optical transmittance of a sample, characterized in that said method comprises the steps of providing a beam of illumination; dividing said beam into a sample beam and a reference beam; directing said sample beam through said sample; redirecting said sample beam back through said sample; directing said sample beam to a photodetector; directing said reference beam to said photodetector; blocking said reference beam to obtain a sample measurement; blocking said sample beam to obtain a reference measurement; and calculating the ratio of said sample measurement to said reference measurement to obtain a measurement of sample transmittance.

2. The method of claim 1, characterized in that said beam of illumination is a broadband beam; and said sample beam is directed through a monochromator to create a monochromatic sample beam; and said reference beam is directed through a monochromator to create a monochromatic reference beam.

3. The method of claim 1, characterized in that said beam of illumination is a monochromatic beam.

4. The method of claim 3, characterized in that said monochromatic beam is created by passing light from a broadband source of illumination through a monochromator.

5. The method of claims 2 to 4, characterized in that said monochromator is a rotating wheel containing interference filters.

6. The method of claim 1, characterized in that said dividing of said beam is achieved with a beam splitter.

7.      The method of claim 1, characterized in that it further comprises the steps of blocking, simultaneously, said sample beam and said reference beam from reaching said photodetector; recording the output signal of said photodetector; and  subtracting said output signal from said sample measurement and said reference measurement.

8.      An apparatus for measuring the optical transmittance of a sample, comprising a source of illumination; means for splitting said illumination into a sample and a reference beam; means for directing said sample beam through said sample; means for redirecting said sample beam back through said sample; means for directing said sample beam to a photodetector; means for directing said reference beam to said photodetector; means for blocking said reference beam to obtain a sample measurement; means for blocking said sample beam to obtain a reference measurement; and means for calculating the ratio of said sample measurement to said reference measurement to obtain a measurement of sample transmittance.

9.      The apparatus of claim 8 further comprising a broadband illumination; means for directing said sample beam through a monochromator to create a monochromatic sample beam; means for directing said reference beam through a monochromator to create a monochromatic reference beam.

10.     The apparatus of claim 8, charaterized in that said source of illumination comprises a source of broadband illumination and a monochromator.

11.     The apparatus of claims 9 or 10, characterized in that said monochromator is a rotating wheel of interference filters.

12.     The apparatus of claims 8 or 9, characterized in it further comprises means for blocking, simultaneously, said sample beam and said reference beam from reaching said photodetector; means for recording the output of said photodetector; and means for subtracting said output from said sample measurement and said reference measurement.

13.     The apparatus of claims 8 or 9, characterized in that said beam splitter is a polarizing beam splitter.

14.     The apparatus of claims 8 to 10, further comprising a polarizer placed in the illumination.

15.     The apparatus of claims 8 to 10, further comprising a polarizer placed in the sample beam between said sample and said photodetector.

16.     The apparatus of claims 8 to 10, characterized in that said source is a tungsten lamp and said photodetector is a lead sulfide cell.

17.     The apparatus of claims 8 to 10, characterized in that said calculating means is a computer.

18.     The apparatus of claim 8 further comprising a tungsten lamp to provide broadband illumination; a first optical system to direct said broadband illumination to a rotatable filter wheel arranged prior to said beam splitter; one or more interference filter(s) mounted in said wheel for the purpose of isolating narrow bands of wavelengths from said broadband illumination; a second optical system for directing said sample beam through a sample; a mirror for redirecting said sample beam back through said sample; a third optical system for directing said sample beam to a photodetector; a fourth optical system for directing said reference beam to said photodetector; a shutter mechanism for alternately blocking said reference beam and said sample beam; and an electronic system for converting the output of said photodetector into electrical signals; and a computer for analyzing said electrical signals to compute sample transmittance.

19.    The apparatus of claim 18, characterized in that the portions of said filter wheel located between said interference filters block said sample beam and said reference beam from reaching said photodetector for the purpose of measuring the output of said photodetector in order to compensate for stray light, thermal radiation and electrical bias.

20.    The apparatus of claims 8 to 19, characterized in that said photodetector is a lead sulfide cell.

21.    The apparatus of claims 8 to 20 further including shutter means for alternately blocking the application of the sample and reference beams to the photodetector.

LIGHT SOURCE — 1

MONOCHROMATOR — 2

BEAM ALTERNATOR — 3

MIRROR

MIRROR

MIRROR

SAMPLE COMPARTMENT — 6

REFERENCE PATH — 5

MEASUREMENT PATH — 4

MIRROR

MIRROR

DETECTOR — 7

ELECTRONICS — 8

FIG.1

- 1/2 -

0176826

FIG. 2